(19) Europäisches Patentamt
European Patent Office
Office européen des brevets

(11) **EP 1 840 833 A2**

(12) **EUROPEAN PATENT APPLICATION**

(43) Date of publication:
**03.10.2007 Bulletin 2007/40**

(51) Int Cl.:
***G06T 7/00*** (2006.01)

(21) Application number: **07005457.2**

(22) Date of filing: **16.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **20.03.2006 IT BO20060200**

(71) Applicant: **ARCADIA LAB SRL**
**40124 Bologna (IT)**

(72) Inventors:
• **Roffilli, Matteo**
**47023 Cesena (FC) (IT)**

• **Iampieri, Emiro**
**64011 Alba Adriatica (TE) (IT)**
• **Angelini, Enrico**
**47100 Forli (FC) (IT)**
• **Masotti, Matteo**
**40122 Bologna (IT)**

(74) Representative: **Crugnola, Pietro**
**Luppi Crugnola & Partners S.r.l.**
**Viale Corassori 54**
**41100 Modena (IT)**

(54) **Method and corresponding apparatus for automatically searching for zones of interest in digital images**

(57) A method for automatically searching for zones of interest in a digital image. The method comprises the following steps: providing a ranklet coefficient representation of a digital image zone; and highlighting, or not, the zone of the digital image on the basis of a probability value obtained using a classifier known as the Relevance Vector Machine (RVM).

Fig. 1

EP 1 840 833 A2

**Description**

The present invention relates to a method and an apparatus for automatically searching for zones of interest in digital images.

Although in the following description express reference will be made to the detection of tumour masses in digital mammographic images, it is understood that the teachings of the present invention can be applied, *mutatis mutandis,* to the analysis and processing of any digital image originating from any investigation method, such as, for example, Nuclear Magnetic Resonance, thermography, echography, scintimammography, CAT, etc of lungs, digestive apparatus, etc.

In many cases the objects of interest in a digital image subjected to analysis have features such as shape and dimensions that are variable and are not well definable. On the other hand many of the algorithms used until now for the automatic search of objects in an image require the features of the object to be detected to be well specified: this specification is performed through appropriate work of an operator who is skilled in the art. In order to overcome the problems in defining the features and preventing or reducing the work required of the expert skilled in the art, in recent years automatic detecting systems have been devised that do not require the aforesaid features to be specified *a priori* and which learn in an automatic manner from many examples of the objects to be classified. In the prior art, the best results from such "automatic learning" systems have been obtained from systems consisting of Support Vector Machine (SVM) classifiers trained to recognise a class of objects by using the original image, consisting of the levels of grey of all the pixels thereof or of a representation thereof through a wavelet transform.

On the other hand, these systems, based as said on a representation of the objects at the level of grey or on a wavelet representation, and on SVM classifiers, have some drawbacks that the present invention intends to overcome.

Problems exist that are connected with the representation of the objects by means of the levels of grey of the pixels and by means of a wavelet transform. These drawbacks are due to the fact that some factors can cause variations in the grey levels of the objects and the values of the coefficients of the wavelet representation thereof. For example, such factors may be the noise due to the instrumentation that produces the image or the values of the acquisition parameters of this instrumentation or the use of instruments that differ from one another, albeit slightly. For example, there may be variations between the digital images of the same breast obtained with various digital mammographs or between the image obtained with a digital mammograph and the one obtained with an analogue mammograph and which is then digitized.

These variations in the levels of grey and in the wavelet coefficient values may lead to a series of negative consequences for the use of the aforesaid "automatic learning" methods. The following is an explanatory example. In order to learn to recognise the masses in mammographic images, the automatic classifier needs to be trained with a great number of masses taken from images diagnosed by expert radiologists. The acquisition and the diagnosis of a large quantity of images entails major expenditure of work and cost. On the other hand, on the Internet for some time image databases have been available free of charge that are acquired with analogue mammographs that are diagnosed by expert radiologists and digitized. Certainly, the possibility of using these databases would bring a significant advantage for training a classifier that is then usable for automatically detecting masses on digital images produced by various types of digital mammographs or on originally analogue images that are then digitized. The lack of this possibility currently entails the need for all images diagnosed for training to be produced with the same type of mammograph that is then used to produce the images on which to operate the classifier for the help with detecting masses. Another drawback, which is always connected with the representation by means of levels of grey and with wavelet representation, consists of the fact that the same automatic detection system that operates in a clinical environment may encounter difficulties in operating at constant levels of sensibility and specificity if it has to analyse images coming from different types of mammographs in the clinical environment.

Other drawbacks, which are always due to the type of representation of the objects to be detected, are linked to the fact that even small variations in the values of the levels of grey of the pixels of the image of the object or in the values of the coefficients of the wavelet representation of the image may lead to modifications in the classification of the object by the SVM classifiers. This drawback is also closely connected to the fact that the reply of the SVM classifier is of binary type. An object is classified by SVM as an object of interest or as an object that is not of interest. SVM in fact has the limit of not directly providing the probability that the reported objects belong to the class of objects to be detected. In the literature attempts exist to obtain, through the processing of the SVM supply, numeric values that can estimate the aforesaid probability, but it is not yet proven that the produced estimates are valid. On the other hand it is quite natural that in such a difficult environment as the classification of zones as suspected or not suspected of representing tumour masses instruments are also required that directly provide the probability that a zone represents a tumour mass.

This is made more comprehensible by the consideration that also in the case of images analysed by several expert radiologists there is often a probability indication of the nature of a particular analysed zone: the certainty is obtained only by subjecting the breast to biopsy. These considerations show that a probability-based response is desirable. All the previous considerations regarding the stability of the representation of the objects and the advisability of having at least a probabilistic response regarding the nature of an object have led to the present invention, which will be specified below.

In the approach followed in the present invention, the representation of the zones to be classified is achieved through a transform known as the "ranklet transform" (see article by F. Smeraldi. Ranklets: Orientation selective non-parametric features applied to face detection. In Proceedings of the 16th International Conference on Pattern Recognition Quebec QC, volume 3, pages 379-382, August 2002). The ranklet transform is an orientatable, non-parametric and multi-resolution transform. It is orientatable because it is calculated in a similar manner to the Haar wavelet transform. Similarly to the Haar wavelet transform, in fact, the ranklet coefficients can be calculated for various orientations by applying the vertical, horizontal and diagonal Haar wavelet supports to the analysed image. It is non-parametric due to the fact that it is based on the relative rank of the pixels rather than on the intensity value thereof: rank is defined as the corresponding order of each pixel with respect to the others on the basis of the intensity value. Lastly, it is multi-resolution due to the possibility of calculating the ranklet coefficients with different resolutions by means of redimensioning and translating along the analysed image the aforesaid Haar wavelet supports. The advantages of the representation of a zone of an image by means of ranklet transform with respect to the representation of levels of grey of the pixels are due to the properties of orientatability, multiresolution and non-parametricity of the ranklet transform. On the other hand, the fact of not being parametric confers on the ranklet transform advantages in terms of toughness and invariance compared with the wavelet transform. Toughness is defined as the non sensibility of the ranklet transform to variations in the intensity values of the pixels that do not change the rank of the pixels. Invariance is defined as stability compared with changes in the instruments for acquiring images or in the values of the parameters that regulate such acquisition methods.

The ranklet representation of the objects to be detected is provided at the input to a classifier called the Relevance Vector Machine (RVM) (see article by Tipping, M. E. (2001). Sparse Bayesian learning and the relevance vector machine. Journal of Machine Learning Research 1, 211-244). The RVM classifier keeps the excellent properties of SVM classifiers in terms of classification results, at the same time overcoming the previously highlighted limits thereof. In particular, owing to the solid Bayesiana theoretical basis contemplated in the RVM method, the RVM classifiers are able to provide as a result a number linked to the probability that the investigated object belongs to the class of the objects to be investigated. This information may be of vital importance, as in this way it is possible to select a sensibility threshold at will, to decide how many signals will belong to the class of objects of interest. RVM further identifies the classes of objects to be detected on the basis of a very small number of examples of these objects. These examples will represent a sort of "prototype" for each of the classes, i.e. RVM uses the most characteristic examples of each class to define the classes. The very low number of "prototypes" (relevance vectors) is a further and significant RVM advantage: the small number of "prototypes" in fact improves the generalisation properties of the classifier. In other words, a system based on RVM is able to distinguish objects belonging to different classes using a small number of training examples, simultaneously obtaining more reliable results.

The main object of the present invention is thus to provide a method for automatically searching for zones of interest in a digital image; a method comprising the step of representing zones of said digital image by means of ranklet transform and of highlighting or not said zones on the basis of a probability value obtained using at least a classifier known as the Relevance Vector Machine (RVM).

A further object of the present invention is an apparatus suitable for implementing the main method that is the object of the present invention.

The present invention will now be disclosed with reference to the attached drawings, which illustrate a non-limiting embodiment thereof, in which:

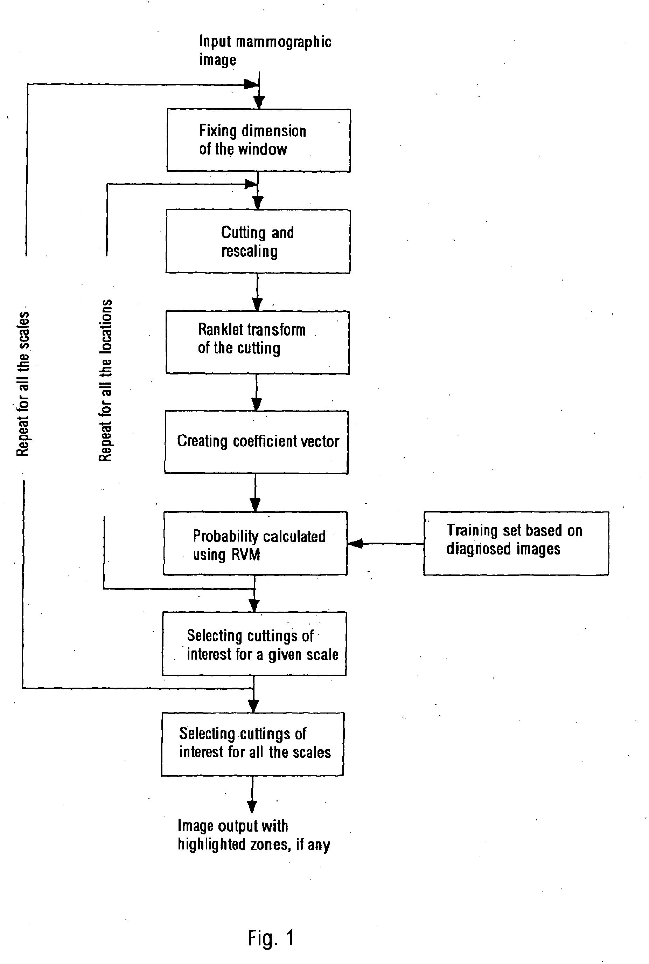

- figure 1 illustrates a block diagram of an embodiment of an automatic search method according to the present invention;
- figure 2 shows the supports of the ranklet transforms.

The system operates in this way: a window with fixed dimensions scans the image by moving from right to left from top to bottom with a pitch of approximately 1/10 of the linear dimensions thereof. For each window identified in this manner the portion of image contained in the window is extracted.

The portion of image is transformed by means of a ranklet transformation of preset parameters.

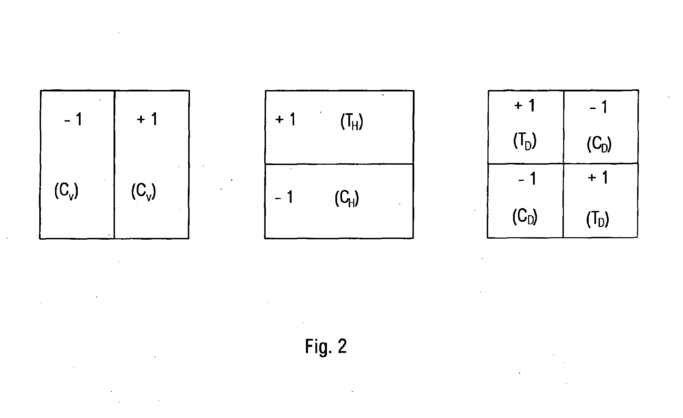

The passages required to calculate the ranklet transform are disclosed below. It is supposed that the portion of image consists of $p_1, ... p_N$ pixels. The ranklet transform is calculated by dividing the N pixels of the same portion of image into two subset T and C each with the dimensions N/2, then assigning half of the pixels to the subset T and the remaining half to the subset C. The two subsets T and C are defined in the same way as the Haar wavelet supports shown in Fig 2. In particular, for the vertical, horizontal and diagonal Haar wavelet supports the subsets $T_V$ and $C_V$, $T_H$ and $C_H$, $T_D$ and $C_D$ are defined. The coefficients $R_j$ with j=V,H,D are then calculated. These coefficients are calculating by normalizing in the interval [-1,1] the number of pairs of pixels $(p_m, p_n)$, with $p_m \in T$ and $p_n \in C$, in which the intensity value of $p_m$ is greater than the intensity of $p_n$. This calculation is repeated for each orientation of the Haar wavelet supports in the following manner:

$$R_j = \frac{\sum_{p \in T_j} \pi(p) - \frac{N}{4}\left(\frac{N}{2}+1\right)}{\frac{N^2}{8}} - 1 \qquad , j = V, H, D$$

where $\sum_{p \in T_j} \pi(p)$ is the sum of the ranks $\pi(p)$ of the pixels p in Tj.

Lastly, the ranklet coefficients are calculated at different resolutions by redimensioning and translating the Haar wavelet supports along the analysed portion of image. The result is a set of groups of three vertical, horizontal and diagonal ranklet coefficients, each of which corresponding to a specific redimensioning and to a specific translation of the Haar wavelet supports.

The numeric coefficients produced by the ranklet transform for each level of resolution and for each scale are concatenated in a single vector.

As both the dimensions of the scanning window and the parameters of the ranklet transform are fixed the number of elements of all the vectors produced by all the windows is identical. This vector constitutes the input for the RVM classifier. The RVM classifier was previously trained with a set of examples chosen in such a way that it returns a high probability value if an input vector is presented to it that is representative of the "mass class".

Thus this RVM classifier returns for the input vector a probability value belonging to the mass class.

In another embodiment the responses of several RVM classifiers can be used to assign this probability value to the input vector.

The windows are then selected that have a greater probability of containing the object of interest, in this case the tumour mass. For this purpose for each window there is defined a group of neighbours, choosing the windows that are spatially near in a preset Euclidean radius r. Inside this group a candidate is elected, i.e. the window with the highest probability.

All the elected windows are stored in a list whilst all the non-elected windows are rejected. The entire procedure is repeated for different dimensions of the scanning window to search for masses of various dimensions. In this way many lists are produced containing as many elected windows as there are searched dimensions.

The windows contained in these lists are inserted into a single list, ordered in descending order on the basis of the probability value associated with them. Windows with a probability below a preset threshold t are rejected. At this point the first n windows are selected, n being a preset value. These remaining windows are the windows that obtained the greatest probability of containing a mass at all search dimensions.

A subsequent step of filtering these remaining windows is then started: in the geometric neighborhood of each window a search is made to see if there are others. If the window in question is isolated it is rejected. If on the other hand there are others, all of them plus the window under examination are grouped into a single new window with which there is associated as a centre the centroid of the component windows, as a dimension the average dimension of the component windows and as a probability value a combination of the probabilities of the probability values of the components.

These new windows are then entered on a new list, ordered in descending order according to the probability value thereof. Lastly, only the first k windows of this new list, with k as a preset parameter, are displayed, by superimposing them graphically on the original image. The superimposition of the edge of the window enables the centre and the dimension of the mass defined to be perceived visually whilst the colour used for the superimposition is associated with the probability value.

**Claims**

1.  A method for automatically searching for zones of interest in a digital image; method **characterised in that** it comprises the following steps:

     a) providing a ranklet coefficient representation of a zone of said digital image;
     b) providing for said zone of said digital image the probability of interest on the basis of said representation, using at least a classifier known as the Relevance Vector Machine (RVM); and

c) highlighting or not said zone of said digital image on the basis of said probability.

2. Method according to claim 1, **characterised in that** said digital image represents mammary tissue.

3. Method according to claim 2, **characterised in that** said zones of interest represent tumour masses.

4. Method according to claim 2, **characterised in that** said zones of interest represent microcalcification or microcalcification groups.

5. Method according to claim 1, **characterised in that** said digital image represents pulmonary tissue.

6. Method according to claim 1, **characterised in that** said digital image represents digestive apparatus tissue.

7. Method according to claims 1-6 suitable for being implemented in an apparatus for processing and analysing digital images.

8. Apparatus suitable for implementing a method according to claims 1-7.

Input mammographic
image

Fixing dimension
of the window

Cutting and
rescaling

Ranklet transform
of the cutting

Creating coefficient vector

Probability calculated
using RVM

Training set based on
diagnosed images

Selecting cuttings of
interest for a given scale

Selecting cuttings of
interest for all the scales

Image output with
highlighted zones, if any

Repeat for all the scales

Repeat for all the locations

Fig. 1

| | |
|---|---|
| - 1 | + 1 |
| $(C_v)$ | $(C_v)$ |

| |
|---|
| + 1 $(T_H)$ |
| - 1 $(C_H)$ |

| | |
|---|---|
| + 1 $(T_D)$ | - 1 $(C_D)$ |
| - 1 $(C_D)$ | + 1 $(T_D)$ |

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **F. SMERALDI.** Ranklets: Orientation selective non-parametric features applied to face detection. *Proceedings of the 16th International Conference on Pattern Recognition Quebec QC,* August 2002, vol. 3, 379-382

- **TIPPING, M. E.** Sparse Bayesian learning and the relevance vector machine. *Journal of Machine Learning Research,* 2001, vol. 1, 211-244